(19) Europäisches Patentamt

European Patent Office

Office européen des brevets

(11) **EP 2 892 205 B1**

(12) **EUROPEAN PATENT SPECIFICATION**

(45) Date of publication and mention
of the grant of the patent:
**19.09.2018 Bulletin 2018/38**

(21) Application number: **13855685.7**

(22) Date of filing: **25.03.2013**

(51) Int Cl.:
*H04L 29/06* (2006.01)    *H04L 29/08* (2006.01)
*H04W 4/02* (2018.01)    *H04W 4/20* (2018.01)

(86) International application number:
**PCT/CN2013/073124**

(87) International publication number:
**WO 2014/075413 (22.05.2014 Gazette 2014/21)**

(54) **METHOD AND DEVICE FOR DETERMINING A SHARING TERMINAL**

VERFAHREN UND VORRICHTUNG ZUR BESTIMMUNG EINES ZU NUTZENDEN ENDGERÄTS

PROCÉDÉ ET DISPOSITIF POUR DÉTERMINER UN TERMINAL DESTINÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2012 CN 201210457141**

(43) Date of publication of application:
**08.07.2015 Bulletin 2015/28**

(73) Proprietor: **Huawei Technologies Co., Ltd.
Longgang District
Shenzhen, Guangdong 518129 (CN)**

(72) Inventors:
• **LIU, Yang
Shenzhen
Guangdong 518129 (CN)**

• **WANG, Dong
Shenzhen
Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 1 379 048      CN-A- 101 227 636
CN-A- 101 257 646      CN-A- 102 685 563
US-A1- 2002 184 641      US-A1- 2010 009 698
US-A1- 2010 203 868**

**Description**

**TECHNICAL FIELD**

The present invention relates to the field of communications science and technologies, and in particular, to a method, an apparatus, and a system for determining a to-be-shared terminal.

**BACKGROUND**

Sharing information is a thing people currently enjoy doing on the Internet. The popularity of social networking sites, such as Facebook, twitter, and Youtube reflects people's urgent requirement for sharing information with friends. However, current information sharing only limits to text sharing, image sharing, and video information sharing, and does not relate to a concept of selecting and sharing in real time of collected visual information. Text and images on a microblog and videos on Youtube are a type of information sharing. As software and hardware technologies of an image collecting device are improved, various image and video collecting devices enter people's daily life and play an important role, for example, a surveillance camera on a city road, various digital cameras in daily life, and a smartphone that has a camera, which makes it possible to collect visual information anytime anywhere. In addition, with an increase of network bandwidth and popularization of social networking, people are no longer satisfied with text and image sharing. A tendency of social networking between people is to capture video information in real time by using a camera and share the video information on line with friends.

Currently, there are also some applications for sharing a camera resource in real time, such as a most common intelligent video surveillance system. By laying out fixed cameras at different places in an area, visual information of the area is obtained in real time, and monitoring is performed by means of viewing, analyzing, playing back, and the like. However, a main disadvantage of the technology is that both locations and the number of cameras are fixed so that a camera collecting apparatus cannot be added dynamically in real time to meet people's different requirements.

EP 1 379 048 A1 discloses a system for providing live multimedia services.

US 2010/0009698 A1 discloses a method for capturing real-time video and audio data at a specific location.

US 2002/0184641 A1 discloses a communications system incorporating a plurality of vehicle mounted web cams that collect video information and transmit the video information together with other local information via a wireless network to a server.

US 2010/0203868 A1 discloses a system and a method for providing itinerary services for travelers and users.

**SUMMARY**

Embodiments of the present invention provide a method, an apparatus, and a system for determining a sharing terminal, which can help a user to share a real scene of an area in real time, and acquire optimal video information by means of cooperative interaction.

According to a first aspect, an embodiment of the present invention discloses a method for determining a sharing terminal, where the method includes:

sending, by a calling terminal, sharing request information, where the sharing request information includes requirement information of the calling terminal that describes a sharing requirement of the calling terminal;
receiving, by the calling terminal, response information that is sent by at least one called terminal according to the requirement information of the calling terminal; and
determining, by the calling terminal according to the response information, a sharing terminal that is to perform real-time video sharing,
wherein at least two called terminals exist, and video collecting apparatuses of the at least two called terminals collect video information of a same shared target in real time to obtain at least two pieces of video information of the shared target, and
wherein the response information comprises intention degree information, wherein the intention degree information indicates a priority that the called terminal can provide video sharing.

With reference to the first aspect of the embodiment of the present invention, in a first possible implementation manner, the sharing request information includes:
at least one of: geographic location information, information about a shared target, and time information.

With reference to the first aspect of the embodiment of the present invention and the first possible implementation manner, in a second possible implementation manner, the called terminal sends the response information according to the requirement information of the calling terminal, which includes:

acquiring system information of the called terminal, where the system information includes at least one of: location information of the called terminal, configuration information of a video collecting apparatus of the called terminal, and network information of the called terminal; and

sending the response information according to the system information and the requirement information of the calling terminal.

With reference to the foregoing first aspect of the embodiment of the present invention, in a third possible implementation manner, the determining, by the calling terminal according to the response information, a sharing terminal that is to perform real-time video sharing includes:

determining, by the calling terminal according to the intention degree information, the satisfactory degree information, or the idle time information, a composite score of the called terminal, and determining the called terminal as the sharing terminal when the composite score of the called terminal meets a preset condition.

With reference to the foregoing first aspect of the embodiment of the present invention, in a fourth possible implementation manner, the calling terminal determines the sharing terminal according to the at least two pieces of video information of the shared target.

With reference to the foregoing first aspect of the embodiment of the present invention, in a fifth possible implementation manner, the method further includes:

establishing a shared connection between the calling terminal and the sharing terminal, where

a video collecting apparatus of the calling terminal collects first video information, and the calling terminal sends the first video information to the sharing terminal; or a video collecting apparatus of the sharing terminal collects second video information, and the sharing terminal sends the second video information to the calling terminal.

According to a second aspect, an embodiment of the present invention discloses an apparatus for determining a sharing terminal, where the apparatus includes:

an information sending module, configured to send sharing request information, where the sharing request information includes requirement information of a calling terminal that describes a sharing requirement of the calling terminal; an information receiving module, configured to receive response information that is sent by a called terminal according to the requirement information of the calling terminal; and a sharing terminal determining module, configured to determine, according to the response information, a sharing terminal that is to perform real-time video sharing, wherein at least two called terminals exist, and video collecting apparatuses of the at least two called terminals collect video information of a same shared target in real time to obtain at least two pieces of video information of the shared target, and the sharing terminal determining module determines the sharing terminal according to the at least two pieces of video information of the shared target, and wherein the response information comprises intention degree information, wherein the intention degree information indicates a priority that the called terminal can provide video sharing.

With reference to the second aspect of the embodiment of the present invention, in a first possible implementation manner, the sharing request information includes:

at least one of: geographic location information, information about a shared target, and time information.

With reference to the foregoing second aspect of the embodiment of the present invention, in a third possible implementation manner, the response information includes at least one of: intention degree information, satisfactory degree information, and idle time information, where:

the intention degree information indicates that the called terminal provides video sharing;

the satisfactory degree information indicates quality of a video provided by the video collecting apparatus of the called terminal; and

the idle time information indicates time when the called terminal can provide a shared video.

With reference to the foregoing second aspect of the embodiment of the present invention, in a fourth possible implementation manner, at least two called terminals exist, and video collecting apparatuses of the at least two called terminals collect video information of a same shared target in real time to obtain at least two pieces of video information of the shared target; and

the sharing terminal determining module determines the sharing terminal according to the at least two pieces of video information of the shared target.

With reference to the foregoing second aspect of the embodiment of the present invention, in a sixth possible implementation manner, the apparatus further includes:

a shared connection establishing module, configured to establish a shared connection between the calling terminal and the sharing terminal, where

a video collecting apparatus of the calling terminal collects first video information, and the calling terminal sends the first video information to the sharing terminal; or a video collecting apparatus of the sharing terminal collects second video information, and the sharing terminal sends the second video information to the calling terminal.

According to a third aspect, an embodiment of the present invention discloses a real-time video sharing system, where the system includes:
at least two terminals, where the terminals include a calling terminal and a called terminal, where:

the calling terminal sends sharing request information, where the sharing request information includes requirement information of the calling terminal that describes a sharing requirement of the calling terminal;
at least one called terminal receives the sharing request information, and the called terminal sends response information according to the requirement information of the calling terminal; and
a sharing terminal that is to perform real-time video sharing is determined according to the response information.

With reference to the third aspect of the embodiment of the present invention, in a first possible implementation manner, the system further includes:

a control center, where the calling terminal sends the sharing request information to the control center;
the control center sends the sharing request information to the called terminal;
the control center receives the response information sent by the called terminal; and
the control center determines, according to the response information, the sharing terminal that is to perform real-time video sharing, and sends information about the determined sharing terminal to the calling terminal.

With reference to the foregoing third aspect of the embodiment of the present invention, in a second possible implementation manner, the system further includes:

establishing a shared connection between the calling terminal and the sharing terminal, where
a video collecting apparatus of the calling terminal collects first video information, and the calling terminal sends the first video information to the sharing terminal; or a video collecting apparatus of the sharing terminal collects second video information, and the sharing terminal sends the second video information to the calling terminal.

With reference to the foregoing third aspect of the embodiment of the present invention, in a third possible implementation manner, the establishing a shared connection between the calling terminal and the sharing terminal includes:
directly establishing the shared connection between the calling terminal and the sharing terminal, or indirectly establishing the shared connection between the calling terminal and the sharing terminal through the control center.

According to the method and the apparatus for determining a sharing terminal, and the real-time video sharing system in the embodiments of the present invention, a real scene of an area can be shared in real time, and optimal video information can further be acquired by means of cooperative interaction.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a flowchart of a method for determining a to-be-shared terminal according to an embodiment of the present invention;
FIG. 2 is a schematic diagram of implementation of the method for determining a to-be-shared terminal shown in FIG. 1;
FIG. 3 is another schematic diagram of implementation of the method for determining a to-be-shared terminal shown in FIG. 1;
FIG. 4 is a structural diagram of an apparatus for determining a to-be-shared terminal according to an embodiment of the present invention;
FIG. 5 is a schematic diagram of a real-time video sharing system according to an embodiment of the present invention; and

## DESCRIPTION OF EMBODIMENTS

The following clearly and completely describes the technical solutions in the embodiments of the present invention with reference to the accompanying drawings in the embodiments of the present invention. It may be understood that the described embodiments are merely a part rather than all of the embodiments of the present invention. All other embodiments obtained by a person of ordinary skill in the art based on the embodiments of the present invention without creative efforts shall fall within the protection scope of the present invention.

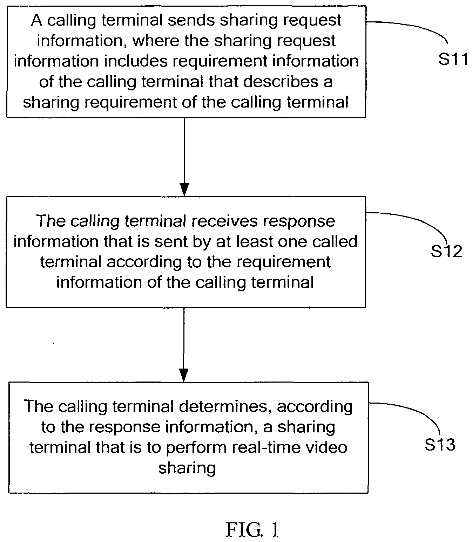

As shown in FIG. 1, according to a method for determining a to-be-shared terminal in an embodiment of the present invention, the method includes:

S11. A calling terminal sends sharing request information, where the sharing request information includes requirement information of the calling terminal that describes a sharing requirement of the calling terminal.

S12. The calling terminal receives response information that is sent by at least one called terminal according to the requirement information of the calling terminal.

S13. The calling terminal determines, according to the response information, a sharing terminal that is to perform real-time video sharing.

According to the method for determining a to-be-shared terminal in this embodiment of the present invention, a user can be helped to share a real scene of an area in real time, and user experience is enhanced.

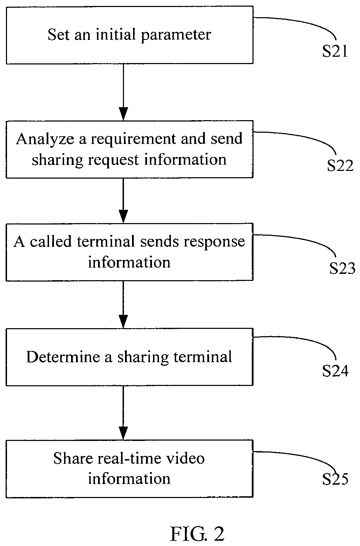

As shown in FIG. 2, according to a method for determining a to-be-shared terminal in an embodiment of the present invention, the method includes:

S21. Set an initial parameter.

Before a calling terminal sends a sharing request, parameters of the calling terminal and a called terminal may be set. These parameters may be set to establish a communication connection between different terminals.

In an embodiment of the present invention, the calling terminal keeps an HTTP persistent connection to the called terminal, and the called terminal feeds back a heartbeat response regularly to ensure validity of the connection. When there is a locating apparatus on the called terminal device, GPS information of the called terminal may be returned to the calling terminal in real time, which makes preparation for subsequently selecting, based on geographic information, a called terminal.

S22. Analyze a requirement and send sharing request information.

A requirement of the calling terminal is analyzed, and the calling terminal sends an information sharing requirement to a called terminal in a target area.

In an embodiment of the present invention, the sharing request information includes at least one of: geographic location information, information about a shared target, and time information.

In an embodiment of the present invention, the calling terminal establishes an HTTP connection to the called terminal, and the calling terminal sends byte stream data of a camera sharing application to the called terminal. Content of the application may describe geographic information as detailed as possible; may briefly describe the requirement, such as a specific target building, scenery, person, and event that need to be photographed; and may also specify photographing time.

S23. A called terminal sends response information.

The called terminal responds to received sharing request information, and then sends the response information.

In an embodiment of the present invention, system information of the called terminal is acquired, where the system information includes at least one of: location information of the called terminal, configuration information of a video collecting apparatus of the called terminal, and network information of the called terminal. The called terminal sends the response information according to the system information and requirement information of the calling terminal.

In an embodiment of the present invention, the called terminal may be set to an automatic response mode or a manual response mode; and sends, by establishing an HTTP connection to the calling terminal, a byte stream for transmitting information. The automatic response mode indicates that the called terminal is in a response state by default for all application information sent by the calling terminal, and the manual response mode indicates that the called terminal may select, according to a specific condition at that time, whether to respond to requirement information sent by the calling terminal. If the called terminal responds to a current application, intention degree information, satisfactory degree information, and idle time information of a current response may further be set according to the requirement information sent by the calling terminal and with reference to conditions of the called terminal, such as a distance from a target and idle time. The intention degree information indicates that the called terminal provides video sharing; the satisfactory degree information indicates quality of a video provided by the video collecting apparatus of the called terminal; and the idle time information indicates time when the called terminal can provide a shared video.

In an embodiment of the present invention, the intention degree information indicates a priority of intending to provide the current response by the called terminal, where the priority may be graded as 0-10. A larger number indicates a stronger intention to respond, and indicates a higher priority. A satisfactory degree indicates that the called terminal determines, according to conditions of the called terminal itself, such as terminal hardware, a network condition, and a distance from a target, quality of a response service that can be provided for the calling terminal, where the satisfactory degree may also be graded as 0-10. A larger number indicates that the called terminal is more capable of providing a high-quality response service.

S24. Determine a sharing terminal.

After receiving the response information, the calling terminal comprehensively evaluates response information of at least one called terminal, so as to determine the sharing terminal.

In an embodiment of the present invention, after the calling terminal receives the response information sent by the called terminal, with reference to content, such as previous historical information of the called terminal, the intention degree information, the satisfactory degree information, and real visual information of the current response, the calling terminal automatically or manually selects a most appropriate called terminal, uses the called terminal as the sharing terminal, and establishes a UDP connection to the sharing terminal, so that the sharing terminal can transmit video stream data in real time.

In an embodiment of the present invention, the sharing terminal is selected from the called terminal according to a selecting method of intelligent ranking and UI (user interface, user interface) interaction.

The method is mainly used for selecting a single sharing terminal, that is, selecting a called terminal with which the calling terminal is most satisfied, to view, control, or command an operation of the called terminal. The selecting method has two steps: First, potential called terminals are ranked based on prior information by using an artificial intelligence method. Then the ranked called terminals are presented to the calling terminal in a UI manner (such as a nine-square grid), and the calling terminal may perform selection by interacting with a user (such as finger tap on a touchscreen).

In an embodiment of the present invention, a rank learning algorithm based on gradient boosting may be used to rank, according to various prior information, called terminals that send response information. According to a Gradient boosting algorithm, priority information is ranked by using a squared hinge loss function. A priori knowledge about two called terminals is given, and x>y is used to indicate that an x information providing terminal is superior to a y information providing terminal under a condition of the priority knowledge. A set of priority information is collected and used as a training set S:

$$S = \{< x_i, y_i > \mid x_i \succ y_i, i = 1, ..., N\}$$

A ranking function h is learned by using the training set. A risk cost of the ranking function may be represented as:

$$R(h, \tau) = \frac{1}{2} \sum_{i=1}^{N} (\max\{0, h(y_i) - h(x_i) + \tau\})^2 - \lambda \tau^2$$

The following is a process of learning the ranking function based on gradient boosting.

1 Start with an initial guess $h_0$, for $k = 1, 2, ...$
2 Using $h_{k-1}$ as the current approximation of $h$, we separate $S$ into two disjoint sets,

$$S^+ = < x_i, y_i > \in S \mid h_{k-1}(x_i) \geq h_{k-1}(y_i) + \tau$$

$$S^- = < x_i, y_i > \in S \mid h_{k-1}(x_i) < h_{k-1}(y_i) + \tau$$

3 Fit a regression function $g_k(x)$ using Gradient Boosting Tree and the following training data

$$\{(x_i, h_{k-1}(y_i)_\tau), (y_i, h_{k-1}(x_i) - \tau) \mid < x_i, y_i > \in S^-\}$$

4 Form the new ranking function as

$$h_k(x) = \frac{kh_{k-1}(x) + \eta g_k(x)}{k+1}$$

where $\eta$ is a shrinkage factor.

A result of intelligent ranking may be displayed in a display interface of the calling terminal in a manner such as a nine-square grid. A user may manually select information about a called terminal as a final sharing terminal in a tapping manner, so as to complete work of intelligently and manually selecting the called terminal.

In another embodiment of the present invention, the sharing terminal may be determined according to a method of automatic image processing and user interaction.

The method is mainly used for performing selection on multiple called terminals that cooperatively operate with each other, that is, finding a called terminal combination, which satisfies an application requirement of the calling terminal, from the multiple called terminals. For example, the calling terminal expects to photograph a scene so as to achieve panorama stitching, and several pieces of response information that can satisfy a requirement of the calling terminal need to be selected from 50 pieces of received response information. In this case, the called terminals need to be ranked according to information about the called terminals, such as historical information, an intention agree, a satisfactory degree, a specific location, image quality, and network speed quality. Video information of the ranked called terminals is displayed in the display interface of the calling terminal in a manner such as a nine-square grid. The user selects multiple called terminals in a tapping or checking manner, and processes visual information captured by the several called terminals at the same time, that is, automatic stitching of multiple images is implemented. A stitched image is displayed in a screen-splitting manner until the calling terminal is satisfied with stitched video information.

S25. Share real-time video information.

A shared connection between the calling terminal and the sharing terminal is established, where a video collecting apparatus of the calling terminal collects first video information, and the calling terminal sends the first video information to the sharing terminal; or a video collecting apparatus of the sharing terminal collects second video information, and the sharing terminal sends the second video information to the calling terminal.

In an embodiment of the present invention, after the shared connection is established, by viewing, in real time, video information collected by a current camera, the calling terminal may directly and remotely control the video collecting apparatus of the sharing terminal according to the requirement of the calling terminal itself; or by means of interactive commanding, the calling terminal makes the video collecting apparatus of the sharing terminal perform a three-dimensional geometric transformation operation, such as translation, and rotating inside and outside a plane; or perform a photographing parameter setting operation, such as exposure, luminance, and dimension. When multiple sharing terminals are required to cooperate with each other, by performing algorithm processing such as computer vision and image processing on obtained video information, a processing result is determined and fed back to the sharing terminals for performing corresponding operations, so as to obtain a better processing result.

In an embodiment of the present invention, the calling terminal keeps an HTTP persistent connection to multiple called terminals, and a providing terminal feeds back a heartbeat response regularly to ensure validity of the connection.

The calling terminal establishes an HTTP connection to an information providing terminal, and sends byte stream data of a camera sharing application.

After the called terminal sends response information, the called terminal is comprehensively evaluated, so as to determine the sharing terminal. The sharing terminal establishes a UDP connection to the calling terminal, and transmits video stream data to the calling terminal.

Based on keypoint matching, the calling terminal performs fast and automatic stitching on an overlapped area of a display area to restore a panorama. During this time, a different sharing terminal may be selected to implement panorama stitching; or an information sending terminal is controlled and commanded to perform a corresponding operation until a satisfactory panorama image is obtained.

In an embodiment of the present invention, the calling terminal keeps an HTTP persistent connection to multiple called terminals, and a providing terminal feeds back a heartbeat response regularly to ensure validity of the connection.

The calling terminal establishes an HTTP connection to an information providing terminal, and sends byte stream data of a camera sharing application.

After the called terminal sends response information, the called terminal is comprehensively evaluated, so as to determine the sharing terminal. The sharing terminal establishes a UDP connection to the calling terminal, and transmits video stream data to the calling terminal. Multiple sharing terminals perform fast three-dimensional reconstruction by using an equal distribution method with reference to a voxel-based method. During this time, a different sharing terminal may be selected to implement three-dimensional reconstruction; or an information sending terminal is controlled and commanded to perform a corresponding operation until a satisfactory all-round vision is obtained.

According to the method for determining a to-be-shared terminal in this embodiment of the present invention, a real scene of an area can be shared in real time, and optimal video information can further be acquired by means of cooperative interaction.

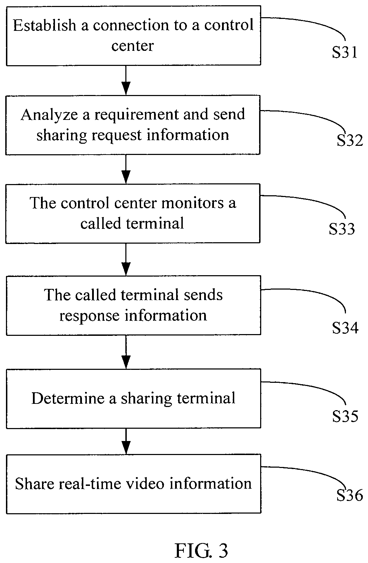

As shown in FIG. 3, according to a method for determining a to-be-shared terminal in an embodiment of the present invention, the method includes:

S31. Establish a connection to a control center.

In an embodiment of the present invention, a calling terminal and a called terminal separately keep an HTTP persistent connection to the control center, and the called terminal feeds back a heartbeat response regularly to ensure validity of the connection. When there is a locating apparatus on the called terminal device, GPS information of the called terminal may be returned to the control center in real time, which makes preparation for subsequently selecting, based on geographic information, a called terminal.

S32. Analyze a requirement and send sharing request information.

The calling terminal analyzes a requirement of the calling terminal itself, and then sends an information sharing requirement to the control center.

In an embodiment of the present invention, the sharing request information includes at least one of: geographic location information, information about a shared target, and time information.

In an embodiment of the present invention, the calling terminal establishes an HTTP connection to the control center, and the calling terminal sends byte stream data of a camera sharing application to the control center. Content of the application may describe geographic information as detailed as possible; may briefly describe the requirement, such as a specific target building, scenery, person, and event that need to be photographed; and may also specify photographing time.

S33. The control center monitors a called terminal.

In an embodiment of the present invention, the control center monitors a called terminal in a target area according to sharing requirement information sent by the calling terminal, establishes an HTTP connection to the called terminal, and forwards data about the sharing requirement information of the calling terminal.

S34. The called terminal sends response information.

The called terminal responds to received sharing request information, and then sends the response information to the control center.

S35. Determine a sharing terminal.

After receiving the response information, the control center comprehensively evaluates response information of at least one called terminal, so as to determine the sharing terminal.

In an embodiment of the present invention, after determining the sharing terminal, the control center sends information about the sharing terminal to the calling terminal.

S36. Share real-time video information.

A shared connection between the calling terminal and the control center is established, and a shared connection between the sharing terminal and the control center is established; or a shared connection between the calling terminal and the sharing terminal is directly established.

In an embodiment of the present invention, in a case in which real-time videos collected by video collecting apparatuses of at least two sharing terminals need to be stitching or be processed stereoscopically,

if the shared connection between the calling terminal and the sharing terminal is directly established, processing on the real-time videos is completed at the calling terminal; and

in a case in which the calling terminal and the sharing terminal indirectly establish the shared connection through the control center, processing on the real-time videos is completed at the calling terminal or at the control center.

It may be understood that, steps in the method shown in FIG. 3 may further implement the method shown in FIG. 2, which are not enumerated for brevity. The steps shown in FIG. 3 include a method that may be derived from steps shown in FIG. 2 without creative efforts by a person of ordinary skill in the art.

According to the method for determining a to-be-shared terminal in this embodiment of the present invention, a real scene of an area can be shared in real time, and optimal video information can further be acquired by means of cooperative interaction.

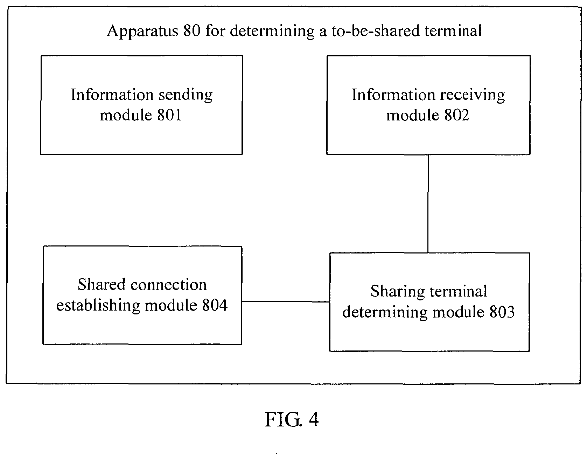

As shown in FIG. 4, according to an apparatus 80 for determining a to-be-shared terminal in an embodiment of the present invention, the apparatus 80 includes: an information sending module 801, configured to send sharing request information, where the sharing request information includes requirement information of a calling terminal that describes a sharing requirement of the calling terminal; an information receiving module 802, configured to receive the sharing request information, or receive response information that is sent by a called terminal according to the requirement information of the calling terminal; and a sharing terminal determining module 803, configured to determine, according to the response information, a sharing terminal that is to perform real-time video sharing. The information receiving module 802 and the sharing terminal determining module 803 are connected.

According to the apparatus 80 for determining a to-be-shared terminal in this embodiment of the present invention, a real scene of an area can be shared in real time, and optimal video information can further be acquired by means of cooperative interaction.

In an embodiment of the present invention, the sharing request information includes at least one of: geographic location information, information about a shared target, and time information.

In an embodiment of the present invention, the called terminal sends the response information according to the requirement information of the calling terminal, which includes: acquiring system information of the called terminal, where the system information includes at least one of: location information of the called terminal, configuration information of a video collecting apparatus of the called terminal, and network information of the called terminal; and sending, by the called terminal, the response information according to the system information and the requirement information of the calling terminal.

In an embodiment of the present invention, the response information includes at least one of: intention degree information, satisfactory degree information, and idle time information, where the intention degree information indicates a priority that the called terminal provides video sharing; the satisfactory degree information indicates quality of a video provided by the video collecting apparatus of the called terminal; and the idle time information indicates time when the called terminal can provide a shared video.

In an embodiment of the present invention, the sharing terminal determining module 803 determines, according to the response information, the sharing terminal that is to perform real-time video sharing, which includes: determining, by the calling terminal according to the intention degree information, the satisfactory degree information, or the idle time information, a composite score of the called terminal, and determining the called terminal as the sharing terminal when the composite score of the called terminal meets a preset condition.

In an embodiment of the present invention, at least two called terminals exist, where video collecting apparatuses of the at least two called terminals collect video information of a same shared target in real time to obtain at least two pieces of video information of the shared target; and the sharing terminal determining module 803 determines the sharing terminal according to the at least two pieces of video information of the shared target.

In an embodiment of the present invention, the apparatus 80 for determining a to-be-shared terminal further includes:

a shared connection establishing module 804, where the shared connection establishing module 804 is connected to the sharing terminal determining module 803 and is configured to establish a shared connection between the calling terminal and the sharing terminal, where a video collecting apparatus of the calling terminal collects first video information, and the calling terminal sends the first video information to the sharing terminal; or a video collecting apparatus of the sharing terminal collects second video information, and the sharing terminal sends the second video information to the calling terminal.

According to the apparatus 80 for determining a to-be-shared terminal in this embodiment of the present invention, a real scene of an area can be shared in real time, and optimal video information can further be acquired by means of cooperative interaction.

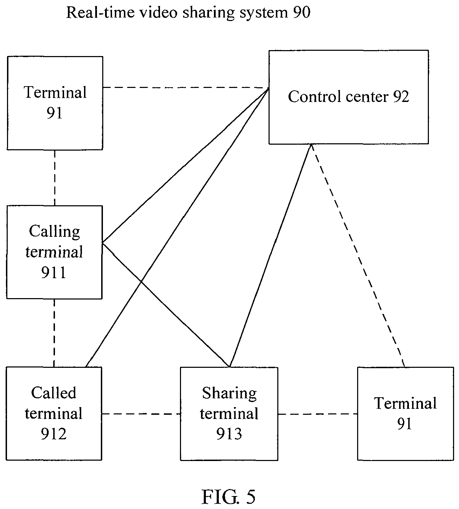

FIG. 5 discloses a real-time video sharing system.

As shown in FIG. 5, a real-time video sharing system 90 includes at least two terminals 91, where the terminals 91 include a calling terminal 911 and a called terminal 912; the calling terminal 911 sends sharing request information, where the sharing request information includes requirement information of the calling terminal that describes a sharing requirement of the calling terminal 911; at least one called terminal 912 receives the sharing request information, and the called terminal 912 sends response information according to the requirement information of the calling terminal; and a sharing terminal 913 that is to perform real-time video sharing is determined according to the response information. The terminals 91 are connected in a communication manner.

In an embodiment of the present invention, the system further includes a control center 92, where the control center 92 and the terminals 91 are connected in a communication manner. The calling terminal 911 sends the sharing request information to the control center 92; the control center 92 sends the sharing request information to the called terminal 912; the control center 92 receives the response information sent by the called terminal 912; and the control center 92 determines, according to the response information, the sharing terminal 913 that is to perform real-time video sharing, and sends information about the determined sharing terminal 913 to the calling terminal 911.

In an embodiment of the present invention, a shared connection between the calling terminal 911 and the sharing terminal 913 is established.

A video collecting apparatus of the calling terminal 911 collects first video information, and the calling terminal 911 sends the first video information to the sharing terminal 913; or a video collecting apparatus of the sharing terminal 913 collects second video information, and the sharing terminal 913 sends the second video information to the calling terminal 911.

In an embodiment of the present invention, the shared connection between the calling terminal 911 and the sharing terminal 913 is directly established, or the shared connection between the calling terminal 911 and the sharing terminal 913 is indirectly established through the control center.

The called terminal (a shared information providing terminal) is a mobile terminal that has a camera, and may be a mobile phone, a tablet computer, or the like. The calling terminal (a shared information requesting terminal) may be a mobile terminal or may be a fixed terminal.

According to the real-time video sharing system in this embodiment of the present invention, a real scene of an area can be shared in real time, and optimal video information can further be acquired by means of cooperative interaction.

It may be clearly understood by a person skilled in the art that, for the purpose of convenient and brief description, for a detailed working process of the foregoing apparatus, reference may be made to a corresponding process in the foregoing method embodiments, and details are not described herein again.

In the several embodiments provided in the present application, it should be understood that the disclosed system, apparatus, and method may be implemented in other manners. For example, the apparatus embodiment described in the foregoing is merely exemplary. For example, the unit division is merely logical function division or may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in the form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for determining a sharing terminal, wherein the method comprises:

   sending (S11), by a calling terminal, sharing request information, wherein the sharing request information comprises requirement information of the calling terminal that describes a sharing requirement of the calling terminal;
   receiving (S12), by the calling terminal, response information that is sent by at least one called terminal according to the requirement information of the calling terminal; and
   determining (S13), by the calling terminal according to the response information, a sharing terminal that is to perform real-time video sharing,
   **characterized in that** at least two called terminals exist, and video collecting apparatuses of the at least two called terminals collect video information of a same shared target in real time to obtain at least two pieces of video information of the shared target, and wherein the response information comprises intention degree information, wherein the intention degree information indicates a priority that the called terminal can provide video sharing.

2. The method according to claim 1, wherein the requirement information of the calling terminal comprises:
   at least one of: geographic location information, information about a shared target, and time information.

3. The method according to claim 1 or 2, wherein the called terminal sends the response information according to the requirement information of the calling terminal, which comprises:

   acquiring system information of the called terminal, wherein the system information comprises at least one of:

location information of the called terminal, configuration information of a video collecting apparatus of the called terminal, and network information of the called terminal; and

sending, by the called terminal, the response information according to the system information and the requirement information of the calling terminal.

4. The method according to claim 3, wherein the determining, by the calling terminal according to the response information, a sharing terminal that is to perform real-time video sharing comprises:
determining, by the calling terminal according to the intention degree information, the satisfactory degree information, or the idle time information, a composite score of the called terminal, and determining the called terminal as the sharing terminal when the composite score of the called terminal meets a preset condition.

5. The method according to any one of claims 1 to 4, wherein the calling terminal determines the sharing terminal according to the at least two pieces of video information of the shared target.

6. The method according to any one of claims 1 to 5, wherein the method further comprises:

establishing a shared connection between the calling terminal and the sharing terminal, wherein
a video collecting apparatus of the calling terminal collects first video information, and the calling terminal sends the first video information to the sharing terminal; or a video collecting apparatus of the sharing terminal collects second video information, and the sharing terminal sends the second video information to the calling terminal.

7. An apparatus (80) for determining a sharing terminal, wherein the apparatus comprises:

an information sending module (801), configured to send sharing request information, wherein the sharing request information comprises requirement information of a calling terminal that describes a sharing requirement of the calling terminal;
an information receiving module (802), configured to receive response information that is sent by a called terminal according to the requirement information of the calling terminal; and
a sharing terminal determining module (803), configured to determine, according to the response information, a sharing terminal that is to perform real-time video sharing, **characterized in that** at least two called terminals exist, and video collecting apparatuses of the at least two called terminals collect video information of a same shared target in real time to obtain at least two pieces of video information of the shared target; and
the sharing terminal determining module determines the sharing terminal according to the at least two pieces of video information of the shared target, and
wherein the response information comprises intention degree information, wherein the intention degree information indicates a priority that the called terminal can provide video sharing.

8. The apparatus (80) according to claim 7, wherein the requirement information of the calling terminal comprises:
at least one of: geographic location information, information about a shared target, and time information.

9. The apparatus (80) according to claim 7 or 8, wherein the called terminal sends the response information according to the requirement information of the calling terminal, which comprises:

acquiring system information of the called terminal, wherein the system information comprises at least one of: location information of the called terminal, configuration information of a video collecting apparatus of the called terminal, and network information of the called terminal; and
sending, by the called terminal, the response information according to the system information and the requirement information of the calling terminal.

10. The apparatus (80) according to any one of claims 7 to 9, wherein the sharing terminal determining module determines, according to the response information, the sharing terminal that is to perform real-time video sharing, which comprises:
determining, by the calling terminal according to the intention degree information, the satisfactory degree information, or the idle time information, a composite score of the called terminal, and determining the called terminal as the sharing terminal when the composite score of the called terminal meets a preset condition.

11. The apparatus (80) according to any one of claims 7 to 9, wherein the apparatus further comprises:

a shared connection establishing module (804), configured to establish a shared connection between the calling terminal and the sharing terminal, wherein
a video collecting apparatus of the calling terminal collects first video information, and the calling terminal sends the first video information to the sharing terminal; or a video collecting apparatus of the sharing terminal collects second video information, and the sharing terminal sends the second video information to the calling terminal.

**Patentansprüche**

1. Verfahren zum Bestimmen eines Endgeräts für gemeinsame Nutzung, wobei das Verfahren Folgendes umfasst:

   Senden (S11) durch ein rufendes Endgerät von Informationen zur Anforderung einer gemeinsamen Nutzung, wobei die Informationen zur Anforderung einer gemeinsamen Nutzung Bedarfsinformationen des rufenden Endgeräts umfassen, die einen Bedarf des rufenden Endgeräts für eine gemeinsame Nutzung beschreiben;
   Empfangen (S12) durch das rufende Endgerät von Antwortinformationen, die von mindestens einem gerufenen Endgerät gemäß den Bedarfsinformationen des rufenden Endgeräts gesendet werden; und
   Bestimmen (S13) durch das rufende Endgerät gemäß den Antwortinformationen eines Endgeräts für gemeinsame Nutzung, von dem eine gemeinsame Videonutzung in Echtzeit durchzuführen ist,
   **dadurch gekennzeichnet, dass** mindestens zwei gerufene Endgeräte existieren und Videosammelvorrichtungen der mindestens zwei gerufenen Endgeräte Videoinformationen eines selben Endgeräts für gemeinsame Nutzung in Echtzeit sammeln, um mindestens zwei Abschnitte von Videoinformationen des Endgeräts für gemeinsame Nutzung zu erhalten, und wobei die Antwortinformationen Absichtsgradinformationen umfassen, wobei die Absichtsgradinformationen eine Priorität anzeigen, dass das gerufene Endgerät eine gemeinsame Videonutzung bereitstellen kann.

2. Verfahren nach Anspruch 1, wobei die Bedarfsinformationen des rufenden Endgeräts Folgendes umfassen: mindestens eines von: geografischen Standortinformationen, Informationen zu einem Endgerät für gemeinsame Nutzung und Zeitinformationen.

3. Verfahren nach Anspruch 1 oder 2, wobei das gerufene Endgerät die Antwortinformationen gemäß den Bedarfsinformationen des gerufenen Endgeräts sendet, Folgendes umfassend:
   Erfassen von Systeminformationen des gerufenen Endgeräts, wobei die Systeminformationen mindestens eines von Folgendem umfassen:

   Standortinformationen des gerufenen Endgeräts, Auslegungsinformationen einer Videosammelvorrichtung des gerufenen Endgeräts und Netzwerkinformationen des gerufenen Endgeräts und
   Senden durch das gerufene Endgerät der Antwortinformationen gemäß den Systeminformationen und den Bedarfsinformationen des gerufenen Endgeräts.

4. Verfahren nach Anspruch 3, wobei das Bestimmen durch das rufende Endgerät gemäß den Antwortinformationen eines Endgeräts für gemeinsame Nutzung, von dem eine gemeinsame Videonutzung in Echtzeit durchzuführen ist, Folgendes umfasst:
   Bestimmen durch das rufende Endgerät gemäß den Absichtsgradinformationen, den Zufriedenheitsgradinformationen oder den Leerlaufzeitinformationen einer zusammengesetzten Bewertung des gerufenen Endgeräts und Bestimmen des gerufenen Endgeräts als das Endgerät für gemeinsame Nutzung, wenn die zusammengesetzte Bewertung des gerufenen Endgeräts eine voreingestellte Bedingung erfüllt.

5. Verfahren nach einem der Ansprüche 1 bis 4, wobei das rufende Endgerät das Endgerät für gemeinsame Nutzung gemäß den mindestens zwei Abschnitten von Videoinformationen des Endgeräts für gemeinsame Nutzung bestimmt.

6. Verfahren nach einem der Ansprüche 1 bis 5, wobei das Verfahren ferner Folgendes umfasst:
   Einrichten einer Verbindung für gemeinsame Nutzung zwischen dem rufenden Endgerät und dem Endgerät für gemeinsame Nutzung, wobei eine Videosammelvorrichtung des rufenden Endgeräts erste Videoinformationen sammelt und das rufende Endgerät die ersten Videoinformationen an das Endgerät für gemeinsame Nutzung sendet oder eine Videosammelvorrichtung des Endgeräts für gemeinsame Nutzung zweite Videoinformationen sammelt und das Endgerät für gemeinsame Nutzung die zweiten Videoinformationen an das rufende Endgerät sendet.

7. Vorrichtung (80) zum Bestimmen eines Endgeräts für gemeinsame Nutzung, wobei die Vorrichtung Folgendes umfasst:

ein Informationssendemodul (801), das dazu ausgelegt ist, Informationen zur Anforderung einer gemeinsamen Nutzung zu senden, wobei die Informationen zur Anforderung einer gemeinsamen Nutzung Bedarfsinformationen eines rufenden Endgeräts umfassen, die einen Bedarf des rufenden Endgeräts für eine gemeinsame Nutzung beschreiben;
ein Informationsempfangsmodul (802), das dazu ausgelegt ist, Antwortinformationen, die von einem gerufenen Endgerät gemäß den Bedarfsinformationen des rufenden Endgeräts gesendet werden, zu empfangen; und
ein Modul (803) zum Bestimmen eines Endgeräts für gemeinsame Nutzung, das dazu ausgelegt ist, gemäß den Antwortinformationen ein Endgerät für gemeinsame Nutzung zu bestimmen, von dem eine gemeinsame Videonutzung in Echtzeit durchzuführen ist, **dadurch gekennzeichnet, dass** mindestens zwei gerufene Endgeräte existieren und Videosammelvorrichtungen der mindestens zwei gerufenen Endgeräte Videoinformationen eines selben Endgeräts für gemeinsame Nutzung in Echtzeit sammeln, um mindestens zwei Abschnitte von Videoinformationen des Endgeräts für gemeinsame Nutzung zu erhalten, und das Modul zum Bestimmen eines Endgeräts für gemeinsame Nutzung das Endgerät für gemeinsame Nutzung gemäß den mindestens zwei Abschnitten von Videoinformationen des Endgeräts für gemeinsame Nutzung bestimmt, und
wobei die Antwortinformationen Absichtsgradinformationen umfassen, wobei die Absichtsgradinformationen eine Priorität anzeigen, dass das gerufene Endgerät eine gemeinsame Videonutzung bereitstellen kann.

8. Vorrichtung (80) nach Anspruch 7, wobei die Bedarfsinformationen des rufenden Endgeräts Folgendes umfassen: mindestens eines von: geografischen Standortinformationen, Informationen zu einem Endgerät für gemeinsame Nutzung und Zeitinformationen.

9. Vorrichtung (80) nach Anspruch 7 oder 8, wobei das gerufene Endgerät die Antwortinformationen gemäß den Bedarfsinformationen des gerufenen Endgeräts sendet, Folgendes umfassend:
Erfassen von Systeminformationen des gerufenen Endgeräts, wobei die Systeminformationen mindestens eines von Folgendem umfassen:

Standortinformationen des gerufenen Endgeräts, Auslegungsinformationen einer Videosammelvorrichtung des gerufenen Endgeräts und Netzwerkinformationen des gerufenen Endgeräts und
Senden durch das gerufene Endgerät der Antwortinformationen gemäß den Systeminformationen und den Bedarfsinformationen des gerufenen Endgeräts.

10. Vorrichtung (80) nach einem der Ansprüche 7 bis 9, wobei das Modul zum Bestimmen eines Endgeräts für gemeinsame Nutzung das Endgerät für gemeinsame Nutzung, von dem eine gemeinsame Videonutzung in Echtzeit durchzuführen ist, gemäß den Antwortinformationen bestimmt, Folgendes umfassend:
Bestimmen durch das rufende Endgerät gemäß den Absichtsgradinformationen, den Zufriedenheitsgradinformationen oder den Leerlaufzeitinformationen einer zusammengesetzten Bewertung des gerufenen Endgeräts und Bestimmen des gerufenen Endgeräts als das Endgerät für gemeinsame Nutzung, wenn die zusammengesetzte Bewertung des gerufenen Endgeräts eine voreingestellte Bedingung erfüllt.

11. Vorrichtung (80) nach einem der Ansprüche 7 bis 9, wobei die Vorrichtung ferner Folgendes umfasst:
ein Modul (804) zum Einrichten einer Verbindung für gemeinsame Nutzung, das dazu ausgelegt ist, zwischen dem rufenden Endgerät und dem Endgerät für gemeinsame Nutzung eine Verbindung für gemeinsame Nutzung einzurichten, wobei eine Videosammelvorrichtung des rufenden Endgeräts erste Videoinformationen sammelt und das rufende Endgerät die ersten Videoinformationen an das Endgerät für gemeinsame Nutzung sendet oder eine Videosammelvorrichtung des Endgeräts für gemeinsame Nutzung zweite Videoinformationen sammelt und das Endgerät für gemeinsame Nutzung die zweiten Videoinformationen an das rufende Endgerät sendet.

**Revendications**

1. Procédé pour déterminer un terminal de partage, le procédé comprenant :

l'envoi (S11), par un terminal appelant, d'une information de demande de partage, l'information de demande de partage comprenant une information d'exigence du terminal appelant qui décrit une exigence de partage du terminal appelant ;
la réception (S12), par le terminal appelant, d'une information de réponse qui est envoyée par au moins un terminal appelé conformément à l'information d'exigence du terminal appelant ; et

la détermination (S13), par le terminal appelant, conformément à l'information de réponse, d'un terminal de partage qui doit effectuer un partage vidéo en temps réel,

**caractérisé en ce qu'**au moins deux terminaux appelés existent, et **en ce que** des appareils de collecte vidéo des au moins deux terminaux appelés collectent en temps réel une information vidéo d'une même cible partagée de façon à obtenir au moins deux éléments d'information vidéo de la cible partagée, et dans lequel l'information de réponse comprend une information de degré d'intention, l'information de degré d'intention indiquant une priorité que le terminal appelé peut fournir un partage vidéo.

2. Procédé selon la revendication 1, dans lequel l'information d'exigence du terminal appelant comprend :
une information d'emplacement géographique, une information sur une cible partagée et/ou une information de temps.

3. Procédé selon la revendication 1 ou 2, dans lequel le terminal appelé envoie l'information de réponse conformément à l'information d'exigence du terminal appelant, ce qui comprend :

l'acquisition d'une information de système du terminal appelé, l'information de système comprenant : une information d'emplacement du terminal appelé, une information de configuration d'un appareil de collecte vidéo du terminal appelé et/ou une information de réseau du terminal appelé ; et

l'envoi, par le terminal appelé, de l'information de réponse conformément à l'information du système et à l'information d'exigence du terminal appelant.

4. Procédé selon la revendication 3, dans lequel la détermination, par le terminal appelant, conformément à l'information de réponse, d'un terminal de partage qui doit effectuer un partage vidéo en temps réel comprend :
la détermination, par le terminal appelant, conformément à l'information de degré d'intention, à l'information de degré satisfaisant, ou à l'information de temps mort, d'un score composite du terminal appelé, et la détermination du terminal appelé comme le terminal de partage lorsque le score composite du terminal appelé remplit une condition prédéfinie.

5. Procédé selon l'une quelconque des revendications 1 à 4, dans lequel le terminal appelant détermine le terminal de partage conformément aux au moins deux éléments d'information vidéo de la cible partagée.

6. Procédé selon l'une quelconque des revendications 1 à 5, le procédé comprenant en outre :

l'établissement d'une connexion partagée entre le terminal appelant et le terminal de partage,
un appareil de collecte vidéo du terminal appelant collectant une première information vidéo, et le terminal appelant envoyant la première information vidéo au terminal de partage ; ou un appareil de collecte vidéo du terminal de partage collectant une deuxième information vidéo, et le terminal de partage envoyant la deuxième information vidéo au terminal appelant.

7. Appareil (80) pour déterminer un terminal de partage, l'appareil comprenant :

un module d'envoi d'information (801), configuré de façon à envoyer une information de demande de partage, l'information de demande de partage comprenant une information d'exigence d'un terminal appelant qui décrit une exigence de partage du terminal appelant ;
un module de réception d'information (802), configuré de façon à recevoir une information de réponse qui est envoyée par un terminal appelé conformément à l'information d'exigence du terminal appelant ; et
un module de détermination de terminal de partage (803), configuré de façon à déterminer, conformément à l'information de réponse, un terminal de partage qui doit effectuer un partage vidéo en temps réel,
**caractérisé en ce qu'**au moins deux terminaux appelés existent, et **en ce que** des appareils de collecte vidéo des au moins deux terminaux appelés collectent en temps réel une information vidéo d'une même cible partagée de façon à obtenir au moins deux éléments d'information vidéo de la cible partagée ; et **en ce que** le module de détermination du terminal de partage détermine le terminal de partage conformément aux au moins deux éléments d'information vidéo de la cible partagée, et
l'information de réponse comprenant une information de degré d'intention, l'information de degré d'intention indiquant une priorité que le terminal appelé peut fournir un partage vidéo.

8. Appareil (80) selon la revendication 7, dans lequel l'information d'exigence du terminal appelant comprend :

une information d'emplacement géographique, une information sur une cible partagée et/ou une information de temps.

9. Appareil (80) selon la revendication 7 ou 8, dans lequel le terminal appelé envoie l'information de réponse conformément à l'information d'exigence du terminal appelant, ce qui comprend :

l'acquisition d'une information de système du terminal appelé, l'information de système comprenant : une information d'emplacement du terminal appelé, une information de configuration d'un appareil de collecte vidéo du terminal appelé et/ou une information de réseau du terminal appelé ; et
l'envoi, par le terminal appelé, de l'information de réponse conformément à l'information de système et à l'information d'exigence du terminal appelant.

10. Appareil (80) selon l'une quelconque des revendications 7 à 9, dans lequel le module de détermination du terminal de partage détermine, conformément à l'information de réponse, le terminal de partage qui doit effectuer le partage vidéo en temps réel, ce qui comprend :
la détermination, par le terminal appelant, conformément à l'information de degré d'intention, à l'information de degré satisfaisant, ou à l'information de temps mort, d'un score composite du terminal appelé, et la détermination du terminal appelé comme le terminal de partage lorsque le score composite du terminal appelé remplit une condition prédéfinie.

11. Appareil (80) selon l'une quelconque des revendications 7 à 9, l'appareil comprenant en outre :

un module d'établissement de connexion partagée (804), configuré de façon à établir une connexion partagée entre le terminal appelant et le terminal de partage,
un appareil de collecte vidéo du terminal appelant collectant une première information vidéo, et le terminal appelant envoyant cette première information vidéo au terminal de partage ; ou un appareil de collecte vidéo du terminal de partage collectant une deuxième information vidéo, et le terminal de partage envoyant cette deuxième information vidéo au terminal appelant.

A calling terminal sends sharing request information, where the sharing request information includes requirement information of the calling terminal that describes a sharing requirement of the calling terminal

S11

The calling terminal receives response information that is sent by at least one called terminal according to the requirement information of the calling terminal

S12

The calling terminal determines, according to the response information, a sharing terminal that is to perform real-time video sharing

S13

FIG. 1

FIG. 2

Establish a connection to a control center — S31

Analyze a requirement and send sharing request information — S32

The control center monitors a called terminal — S33

The called terminal sends response information — S34

Determine a sharing terminal — S35

Share real-time video information — S36

FIG. 3

Apparatus 80 for determining a to-be-shared terminal

| Information sending module 801 | Information receiving module 802 |

| Shared connection establishing module 804 | Sharing terminal determining module 803 |

FIG. 4

Real-time video sharing system 90

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1379048 A1
- US 20100009698 A1
- US 20020184641 A1
- US 20100203868 A1